# EUROPEAN PATENT APPLICATION

(11) **EP 4 006 504 A1**
(43) Date of publication of application: **01.06.2022**
(21) Application number: 20846554.2
(22) Date of filing: 29.07.2020
(51) Int. Cl.: G01H 3/00, G10K 15/00

(54) **EVALUATION SYSTEM, EVALUATION DEVICE, EVALUATION METHOD, AND PROGRAM**

(30) Priority: 31.07.2019 JP 2019141548
(71) Applicant: Nitto Denko Corporation, Ibaraki-shi, Osaka 567-8680 (JP)
(72) Inventor: HATANAKA, Takezo, Ibaraki-shi, Osaka 567-8680 (JP)
(74) Representative: Hoffmann Eitle
(86) International application number: PCT/JP2020/029002
(87) International publication number: WO 2021/020428

(57) **Abstract**

An assessment system includes a sound data acquiring unit configured to acquire sound data collected by a sound insulation device at a predetermined assessment location, the sound insulation device being fit into a wearer's ears; and a noise map generator configured to generate a noise map representing a distribution of a sound pressure level at the predetermined assessment location, based on the sound data acquired by the sound data acquiring unit and position information associated with the sound data.

## Description

### TECHNICAL FIELD

The present invention relates to an assessment system, an assessment device, an assessment method, and a program.

### BACKGROUND ART

In the related art, measures have been taken in noise environments at construction sites and factories, such as ensuring that workers wear earplugs, and measuring noise using noise measuring instruments, in consideration of workers and surrounding environments of the workers.

For example, Patent Document 1 discloses a construction management system in which a portable terminal, a server device, and a terminal device communicate with each other via a network and displays noise measurement information by a noise measuring device on the portable terminal.

Patent Document 2 discloses a noise monitoring system for noise generated during construction work in which a noise measuring unit for measuring a level of noise generated in a construction area is installed to calculate and display the arrived noise level at any monitoring position.

Patent Document 3 discloses a technique for measuring sound pressure levels inside and outside an individual's external auditory canals by means of a probe microphone and a reference microphone included in an internal device for the auditory canals, inserted into the individual's external auditory canals.

### RELATED ART DOCUMENTS

### [Patent Documents]

[Patent Document 1] Japanese Unexamined Patent Application Publication No. 2018-163423
[Patent Document 2] JP Patent No. 6,305,254
[Patent Document 3] Japanese Translation of PCT International Application Publication No. JP-T-2004-524070

### SUMMARY OF THE INVENTION

### [PROBLEM TO BE SOLVED BY THE INVENTION]

In the related art techniques, however, if the worker does not wear earplugs correctly, the original sound insulation performance may not be exhibited. In addition, the related art techniques have problems such as the need to install a large number of noise measuring instruments in noise generating locations. That is, the related art techniques cannot appropriately assess noise, to which the wearer of the earplugs is actually exposed, based on noise data of the noise to which the wearer is actually exposed. In addition, the related art techniques cannot properly assess what kind of noise is generated in which place.

Accordingly, one aspect of the present invention is intended to more appropriately perform assessments associated with noise, to which wearers of earplugs are actually exposed, based on sound data associated with the noise to which the wearers are actually exposed, and it is also intended to appropriately assess noise generation situation at a predetermined position.

### [MEANS FOR SOLVING THE PROBLEM]

In one aspect according to the present invention, an assessment system according to an embodiment of the present invention includes
a sound data acquiring unit configured to acquire sound data collected by a sound insulation device at a predetermined assessment location, the sound insulation device being fit into a wearer's ears; and
a noise map generator configured to generate a noise map representing a distribution of a sound pressure level at the predetermined assessment location, based on the sound data acquired by the sound data acquiring unit and position information associated with the sound data.

### [ADVANTAGEOUS EFFECT OF THE PRESENT INVENTION]

In one aspect according to the present invention, it is possible to more appropriately perform an assessment associated with noise, to which wearers of earplugs are actually exposed, based on sound data of noise to which the wearers are actually exposed and position information of the wearers, and is also possible to appropriately assess noise generation situations at a predetermined position.

### [BRIEF DESCRIPTION OF THE DRAWINGS]

FIG. 1 is a diagram illustrating a system configuration of an assessment system according to a first embodiment of the present invention;
FIG. 2 is a diagram illustrating a configuration of a sound insulation device according to the first embodiment of the present invention;
FIG. 3A is a diagram illustrating an example of a hardware configuration of a sound insulation device;
FIG. 3B is a diagram illustrating an example of a hardware configuration of a server and a terminal;
FIG. 4 is a block diagram illustrating a functional configuration of a server according to a first embodiment of the present invention;
FIG. 5 is a flowchart illustrating an example (first example) of a procedure for generating a noise map by the server according to the first embodiment of the present invention;
FIG. 6 is a flowchart illustrating an example (second example) of a procedure for generating a noise map by the server according to the first embodiment of the present invention;
FIG. 7 is a diagram illustrating an example of a noise map data generated by a noise map generator according to the first embodiment of the present invention;
FIG. 8 is a diagram illustrating an example of a noise map displayed on the terminal device according to the first embodiment of the invention; and
FIG. 9 is a diagram illustrating a system configuration of an assessment system according to a second embodiment of the invention.

### EMBODIMENTS FOR CARRYING OUT THE INVENTION

In the following, embodiments according to the present invention will be described in detail with reference to the accompanying drawings.

### [First Embodiment]

### (System configuration of assessment system 10)

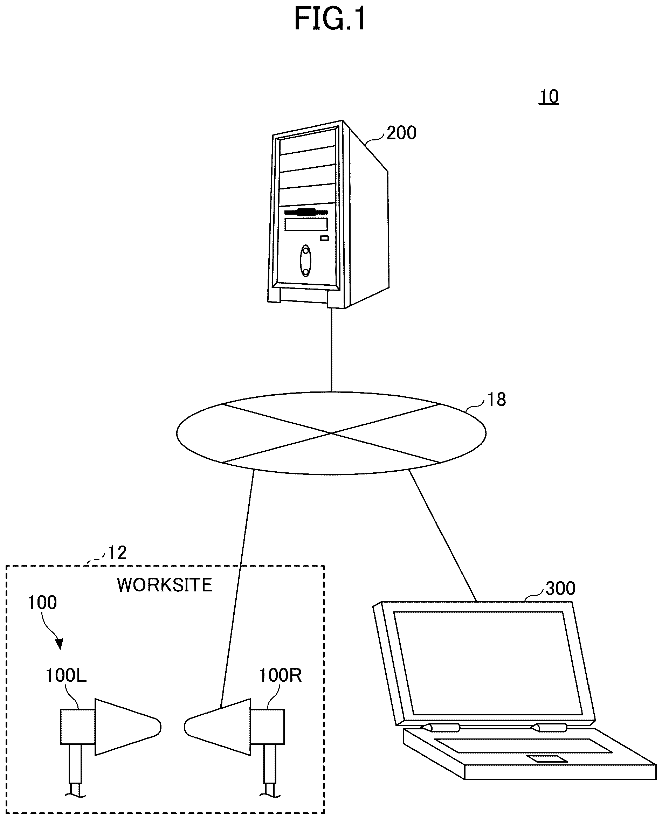

FIG. 1 is a diagram illustrating a system configuration of an assessment system 10 according to a first embodiment of the present invention. The assessment system 10 illustrated in FIG. 1 is a system capable of performing various assessments, based on sound data of noise to which each of a plurality of workers (an example of a "wearer") is exposed at a worksite 12 (an example of an "assessment location" that is subject to assessment).

As illustrated in FIG. 1, the assessment system 10 includes a sound insulation device 100, a server 200, and a terminal device 300. The sound insulation device 100, the server 200, and the terminal device 300 are all connectable to a communication network 18 and are capable of communicating with other devices via the communication network 18. As the communication network 18, for example, the Internet, a LAN (local area network), a VPN (virtual private network), or the like is used.

### <Sound insulation device 100>

To prevent noise-induced hearing loss, the sound insulation device 100 is a device capable of measuring sound pressure levels outside and inside the external auditory canals while protecting the ears from noise. The sound insulation device 100 includes a fitting portion 100L and a fitting portion 100R. The fitting portion 100L is fit to the worker's left ear. The fitting portion 100R is fit to the worker's right ear. The fitting portions 100L and 100R function as earplugs. The fitting portions 100L and 100R can be fit to the worker's ears to shield the worker's external auditory canals from noise to which the worker is exposed.

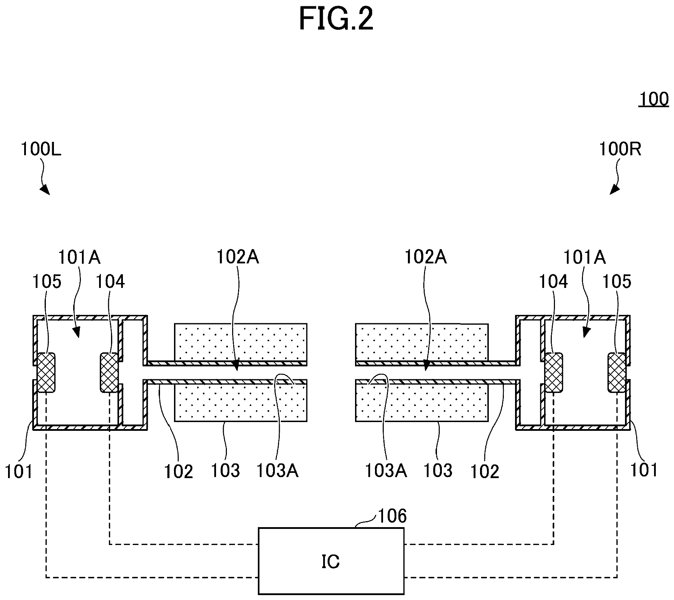

Each of the fitting portions 100L and 100R has a built-in first microphone 104 and a built-in second microphone 105 (see FIG. 2). This enables the sound insulation device 100 to continuously acquire sounds inside and outside the external auditory canal for each of the worker's left and right ears.

The sound insulation device 100 may store sound data acquired by the first microphone 104 and the second microphone 105 in memory or transmit the sound data to the server 200 and the terminal device 300 via the communication network 18. Although FIG. 1 illustrates one sound insulation device 100 for convenience, in practice, the assessment system includes a plurality of sound insulation devices 100 to be fit to the plurality of workers.

### <Server 200>

A server 200 is an example of an "assessment device" and is a device capable of storing sound data collected from each of a plurality of sound insulation devices 100 and capable of performing various noise-related assessments for each of a plurality of workers, based on the accumulated sound data. For example, in this embodiment, the server 200 can perform the following assessments.

- Generation of noise map: Generation of a noise map representing a distribution of a sound pressure level of noise at worksite 12

### <Terminal device 300>

A terminal device 300 is used by a manager at a worksite 12. For example, the terminal device 300 performs various settings for the server 200 and displays various assessment results obtained from the server 200. For example, a PC (Personal Computer), a tablet terminal, a smartphone, or the like may be used as the terminal device 300. Further, the terminal device 300 is another example of an "assessment device", and the following assessment can be performed, based on the sound data acquired from the sound insulation device 100.

Although FIG. 1 illustrates one server 200, the assessment system 10 may include a plurality of servers 200. Although FIG. 1 illustrates one terminal device 300, the assessment system 10 may include a plurality of terminal devices 300.

### (Example of configuration of sound insulation device 100)

FIG. 2 is a diagram illustrating an example of a configuration of the sound insulation device 100 according to the first embodiment of the present invention. In the example illustrated in FIG. 2, in the sound insulation device 100, each of the fitting portions 100L and 100R includes a housing 101, a tube 102, a sound insulation member 103, a first microphone 104, and a second microphone 105. The sound insulation device 100 further includes an IC 106.

The housing 101 is a container-like member. An internal space 101A of the housing 101 accommodates the first microphone 104 and the second microphone 105. The housing 101 is made, for example, of a relatively rigid material (e.g., resin) .

The tube 102 is a cylindrical member extending from the housing 101 to the worker's external auditory canal. An internal space 102A of the tube 102 is connected to the internal space 101A of the housing 101. This enables the tube 102 to direct the sound inside the worker's external auditory canal to the internal space 101A of the housing 101. The tube 102 is made, for example, of a resilient material (e.g., silicon, etc.).

The sound insulation member 103 is attached around the tube 102 by passing the tube 102 through a through-hole 103A formed in the sound insulation member 103. The sound insulation member 103 shields noise from entering the worker's external auditory canal from outside the external auditory canal. The sound insulation member 103 is made of a material having sound insulating properties (e.g., sponge, etc.).

The first microphone 104 is disposed on the tube 102 side, i.e., on the worker's external auditory canal side, in the internal space 101A of the housing 101. The first microphone 104 acquires sound inside the worker's external auditory canal that is propagated through the internal space 102A of the tube 102.

The second microphone 105 is disposed opposite to the first microphone 104, i.e., on the external environment side, in the internal space 101A of the housing 101. The second microphone 105 acquires sound outside the worker's external auditory canal, i.e., the noise to which the worker is exposed.

It should be noted that each of the first microphone 104 and the second microphone 105 includes an acoustic circuit which is not illustrated. The acoustic circuit is configured to include an A/D (Analog to Digital) converter or the like. This enables the first microphone 104 and the second microphone 105 to convert the acquired sound (analog signal) into a digital signal by an acoustic circuit, and output the digital signal as sound data.

The IC 106 performs various controls for sound insulation device 100. For example, the IC 106 may control storage of sound data acquired by the first microphone 104 and the second microphone 105, and may also control transmission of the sound data to the server 200.

The sound insulation device 100 configured in this manner functions as earplugs to shield noise when a sound insulation member 103 of each of the fitting portions 100L and 100R is inserted into the external auditory canal of a corresponding ear of the worker.

In each of the fitting portions 100L and 100R of the sound insulation device 100, the first microphone 104 is capable of acquiring sound inside the external auditory canal of the worker, and the second microphone 105 is capable of acquiring noise to which the worker is exposed.

The sound insulation device 100 is capable of outputting sound data (the external auditory canal internal sound data and the external auditory canal external sound data for each of the fitting portions 100L and 100R) stored in the sound insulation device 100 to an external device (e.g., the server 200 and the terminal device 300) through wireless communication.

It should be noted that the sound insulation device 100 may not include the second microphone 105 (i.e., the sound insulation device 100 may be configured to acquire the external auditory canal internal sound data alone). Or, the sound insulation device 100 may be provided with the second microphone 105 external to the housing 101.

### (Hardware configuration of each device included in the assessment system 10)

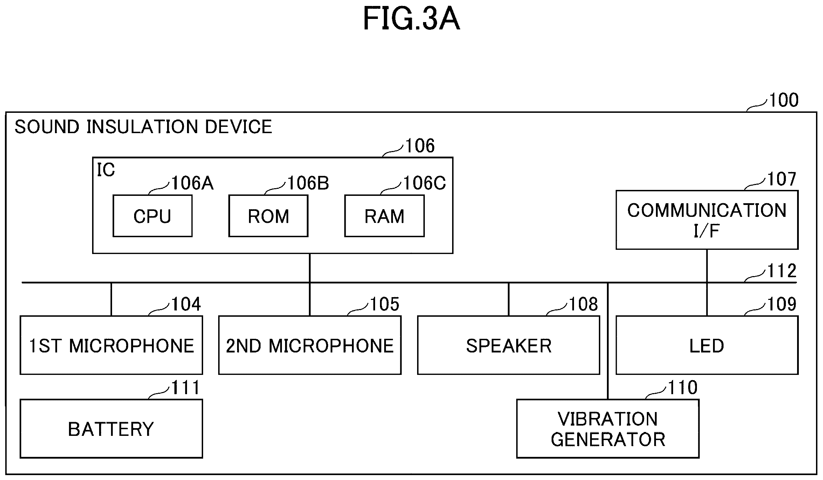

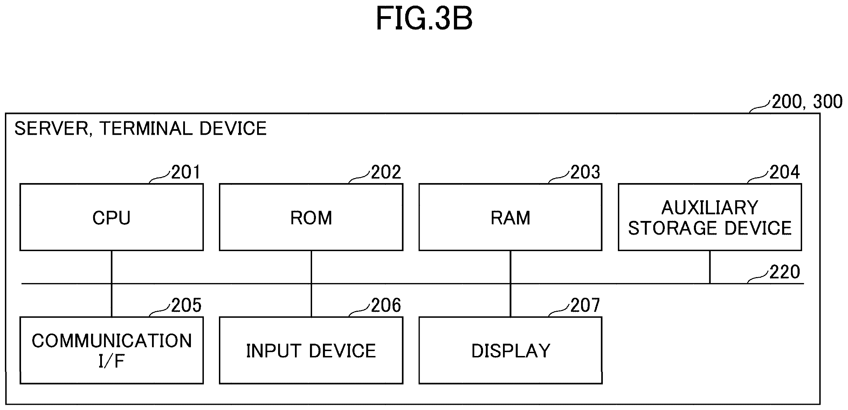

FIGS. 3A and 3B are diagrams illustrating a hardware configuration of each device included in the assessment system 10 according to the first embodiment of the present invention. FIG. 3A is a diagram illustrating an example of a hardware configuration of the sound insulation device 100. FIG. 3B is a diagram illustrating an example of a hardware configuration of the server 200 and the terminal device 300.

### <Sound insulation device 100>

As illustrated in FIG. 3A, the sound insulation device 100 includes a first microphone 104, a second microphone 105, an IC 106, a communication interface 107, a speaker 108, a light emitting diode (LED) 109, a vibration generator 110, and a battery 111. In the sound insulation device 100, each of the hardware except the battery 111 is interconnected via a bus 112.

Note that as illustrated in FIG. 2, in the sound insulation device 100, the first microphone 104 and the second microphone 105 are disposed in each of the fitting portions 100L and 100R. However, the sound insulation device 100 is not limited to this example. In the sound insulation device 100, at least one of the IC 106, the communication I/F 107, the speaker 108, the LED 109, the vibration generator 110, and the battery 111 is shared by the fitting portions 100L and 100R. However, the configuration of the sound insulation device 100 is not limited to this example; and at least one of the IC 106, the communication I/F 107, the speaker 108, the LED 109, the vibration generator 110, and the battery 111 may be disposed in each of the fitting portions 100L and 100R. Further, at least one of the speaker 108, the LED 109, and the vibration generator 110 may be disposed as a notifying unit configured to notify a worker of information.

In each of the fitting portions 100L and 100R, the first microphone 104 acquires sound inside the worker's external auditory canal. In each of the fitting portions 100L and 100R, the second microphone 105 acquires sound outside the worker's external auditory canal.

The IC 106 includes a CPU (Central Processing Unit) 106A, a ROM (Read-only Memory) 106B and a RAM (Random Access Memory) 106C. The CPU 106A performs various controls of the sound insulation device 100 by executing various programs. The ROM 106B is a non-volatile memory, and stores various programs and various data used by the CPU 106A. The RAM 106C is a main storage device such as DRAM (Dynamic Random Access Memory) and SRAM (Static Random Access Memory). For example, the RAM 106C is used by the CPU 106A as a temporary storage area for various data.

The communication I/F 107 is connected to the communication network 18 through wired or wireless communication. The communication I/F 107 communicates with other devices through the communication network 18. For example, the communication I/F 107 may transmit, via the communication network 18, to the server 200 and the terminal device 300, the worker's external auditory canal internal sound data acquired by the first microphone 104 representing a sound inside the worker's external auditory canal and the worker's external auditory canal external sound data acquired by the second microphone 105 representing a sound outside the worker's external auditory canal. As the communication I/F 107, for example, a wireless communication system such as Wi-Fi (registered trademark), Bluetooth (registered trademark), or NFC (Near Field Communication) may be used.

The speaker 108 provides various notifications to a worker by emitting various sounds controlled from the IC 106. The LED 109 provides various notifications to a worker by emitting various kinds of light controlled from the IC 106. The vibration generator 110 provides various notifications to a worker by generating vibrations controlled from the IC 106.

The battery 111 provides power to each of units of sound insulation device 100. Examples of the battery 111 include a variety of rechargeable secondary batteries (e.g., lithium ion secondary batteries, lithium polymer secondary batteries, nickel hydrogen secondary batteries, etc.).

### <Server 200 and terminal device 300>

As illustrated in FIG. 3B, the server 200 and the terminal device 300 include a CPU 201, a ROM 202, a RAM 203, an auxiliary storage device 204, a communication I/F 205, an input device 206, and a display 207. In the server 200 and the terminal device 300, respective hardware units 201 to 207 are interconnected via a bus 220.

The CPU 201 performs various controls of the server 200 and the terminal device 300 by executing various programs. The ROM 202 is a non-volatile memory and stores various programs and data used by the CPU 201. The RAM 203 is a main storage device such as a DRAM or a SRAM. For example, the RAM 203 is used by the CPU 201 as a temporary storage area for various data.

The auxiliary storage device 204 is a non-volatile storage device. For example, the auxiliary storage device 204 stores various programs and data used by CPU 201. Examples of the auxiliary storage device 204 include an HDD (hard disk drive) and an SSD (solid state drive).

The communication I/F 205 is connected to the communication network 18 by wired or wireless communication. The communication I/F 205 communicates with other devices through the communication network 18.

The input device 206 is used by a worker to perform various input operations. The input device 206 includes, for example, a mouse, a button, a keyboard, a touch panel, or the like. The display 207 displays various display screens and the like. Examples of the display 207 include a liquid crystal display, an organic EL (Electro Luminescence) display, and the like.

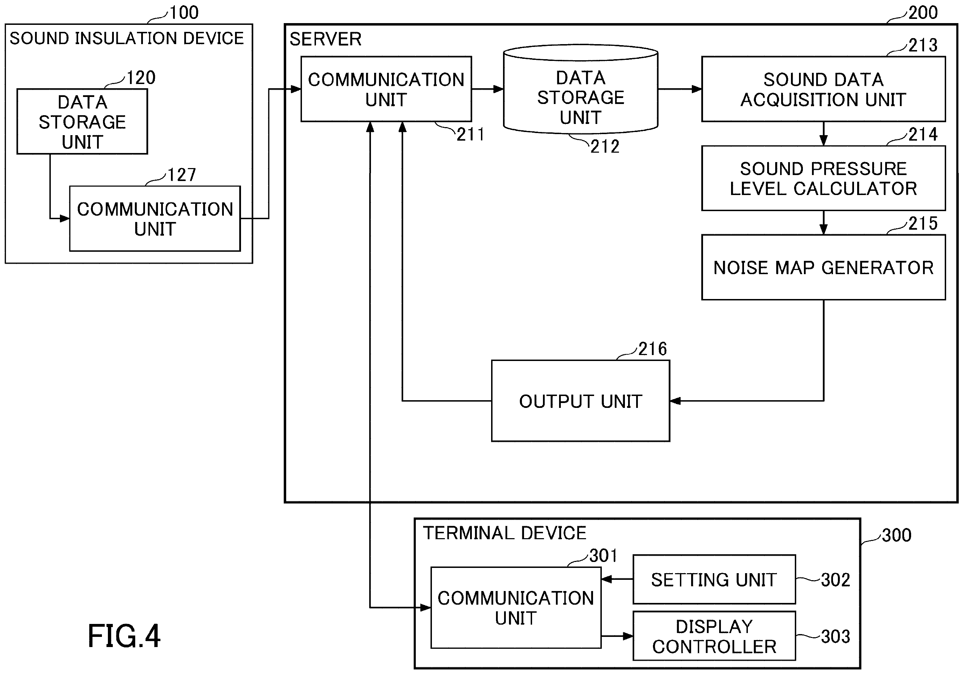

FIG. 4 is a diagram illustrating a functional configuration of each device included in the assessment system 10 according to the first embodiment of the present invention.

### <Functions of sound insulation device 100>

As illustrated in FIG. 4, the sound insulation device 100 includes a data storage unit 120 and a communication unit 127.

The data storage unit 120 stores, for each of the fitting portions 100L and 100R, data acquired by the first microphone 104 and data acquired by the second microphone 105. Since the first microphone 104 and the second microphone 105 of each of the fitting portions 100L and 100R sequentially acquires external auditory canal internal sound data and external auditory canal external sound data, the data storage unit 120 accumulates the external auditory canal internal sound data and the external auditory canal external sound data, every time each of the fitting portions 100L and 100R acquires the external auditory canal internal sound data and the external auditory canal external sound data.

The data storage unit 120 may store each sound data in association with position information representing a current position of the sound insulation device 100 and time information representing the current time. For example, when the sound insulation device 100 includes a GPS (Global Positioning System) (not illustrated), the data storage unit 120 can acquire position information representing the current position of the sound insulation device 100 and time information representing the current time from the GPS. For example, when the position information representing the current position of the sound insulation device 100 (e.g., the work position name or the work area name of the worksite 12) is set to be inside or outside of the sound insulation device 100 (e.g., the server 200, etc.), the data storage unit 120 may acquire the position information from inside or outside of the sound insulation device 100. For example, the data storage unit 120 may acquire time information representing a current time from the system clock (not illustrated) built into the sound insulation device 100.

The association between the sound data and the time information may be made by any device and at any timing. For example, the sound insulation device 100 may associate the sound data with the time information at the timing of storing the sound data in the data storage unit 120. Further, the sound data and time information may, for example, be transmitted from the sound insulation device 100 to the server 200, and the server 200 may associate the sound data received from the sound insulation device 100 with the time information received from the sound insulation device 100. Or, the sound data may be transmitted from the sound insulation device 100 to the server 200, and the server 200 may associate the sound data received from the sound insulation device 100 with time information acquired from the system clock of the server 200.

The communication unit 127 transmits data to and receives data from an external device by communicating with an external device. For example, the communication unit 127 transmits, to the server 200 through the communication network 18, each sound data (i.e., the external auditory canal internal sound data and the external auditory canal external sound data for each of the fitting portions 100L and 100R) stored in the data storage unit 120 together with information associated with each sound data (the position information, the time information, the device ID, etc. of the sound insulation device 100), at a predetermined time or at any time (e.g., every predetermined period such as every hour, every day, etc., at a time when a scheduled time arrives, at a time when a request for transmission is received from the server 200, at a time when a communication connection with the server 200 is made, at a time when a predetermined transmission operation is performed for the sound insulation device 100, etc.).

In the sound insulation device 100, for example, the data storage unit 120 is implemented by the RAM 106C (see FIG. 3A) included in the sound insulation device 100. For example, the communication unit 127 is implemented by the communication I/F 107 (see FIG. 3A) included in the sound insulation device 100.

### <Functions of server 200>

FIG. 4 is a block diagram illustrating a functional configuration of the server 200 according to the first embodiment of the present invention. As illustrated in FIG. 4, the server 200 includes a communication unit 211, a data storage unit 212, a sound data acquiring unit 213, a sound pressure level calculator 214, a noise map generator 215, and an output unit 216.

The communication unit 211 transmits data to and receives data from the external device by communicating with the external device. For example, the communication unit 211 receives sound data (i.e., external auditory canal internal sound data and external auditory canal external sound data) of each of the plurality of sound insulation devices 100, which are transmitted from each of the plurality of sound insulation devices 100.

The data storage unit 212 stores various types of data. For example, the data storage unit 212 stores the sound data (the external auditory canal internal sound data and the external auditory canal external sound data) of each of the plurality of sound insulation devices 100, which are received by the communication unit 211. That is, the data storage unit 212 stores a plurality of sound data sets collected from each of the plurality of sound insulation devices 100.

The sound data acquiring unit 213 acquires, from the data storage unit 212, sound data (e.g., external auditory canal internal sound data and external auditory canal external sound data) of the sound insulation device 100 (e.g., any one of the sound insulation devices 100, any two or more of the sound insulation devices 100, all the sound insulation devices 100, etc.) to be assessed within an assessment period (e.g., one hour, one day, etc.). The manager of the worksite 12 may set, through the terminal device 300, the sound insulation device 100 to be assessed, the assessment period, and the schedule for executing the assessment, as conditions for acquiring the sound data by the sound data acquiring unit 213.

The sound pressure level calculator 214 calculates a sound pressure level of the sound data acquired by the sound data acquiring unit 213. For example, the sound pressure level calculator 214 calculates the sound pressure level, at every predetermined unit time (e.g., every 1 second), using [dB (decibel)] as the unit of measure.

The noise map generator 215 generates a noise map representing a distribution of a noise level at the worksite 12, based on sound data acquired by the sound data acquiring unit 213 and a sound pressure level calculated by the sound pressure level calculator 214. The noise map is a representation of the sound pressure level of the noise being identified by color on a per work position basis or on a per work area basis on the map screen of the worksite 12.

For example, the noise map generator 215 generates noise map data for generating a noise map, on a per work position basis or on a per work area basis at the worksite 12, by associating the sound pressure level of the sound data (the sound pressure level calculated by the sound pressure level calculator 214), position information representing the acquiring position of the sound data, time information representing the time of acquiring the sound data, and the device ID of the sound insulation device 100 that has acquired the sound data, with respect to each of the plurality of sound data acquired at the work position or work area.

The noise map generator 215 generates a noise map based on the generated noise map data. Specifically, the noise map generator 215 colors each work position (or each work area) on the map screen of the worksite 12 with a color corresponding to the sound pressure level acquired at the work position (or work area), based on the noise map data. For example, the noise map generator 215 colors each work position (or each work area) with more red components as the sound pressure level becomes higher, and the noise map generator 215 colors each work position (or each work area) with more blue components as the sound pressure level becomes lower. Accordingly, the noise map generator 215 may generate, as a noise map, a map screen of the worksite 12 with the noise levels being displayed in different colors, on a per work position or work area basis.

The output unit 216 outputs the noise map generated by the noise map generator 215 to the terminal device 300 through the communication unit 211 and the communication network 18. This enables the terminal device 300 to display the noise map on the display 207 to allow the manager of the worksite 12 to view the noise map.

It should be noted that the noise map generator 215 generates only noise map data and does not need to generate a noise map. In this case, the output unit 216 may output the noise map data to the terminal device 300 so as to cause the terminal device 300 to generate and display the noise map.

In addition, the sound pressure level calculator 214 may be disposed in the sound insulation device 100, and the sound pressure level data may be transmitted to the server 200 by the communication unit 127. In this case, the sound data acquiring unit 213 and the sound pressure level calculator 214 of the server 200 are not required, and the noise map generator 215 can acquire the sound pressure level directly from the data storage unit 212.

In the server 200, for example, the data storage unit 212 is implemented by a RAM 203 or an auxiliary storage device 204 (see FIG. 3B) included in the server 200. For example, the sound data acquiring unit 213, the sound pressure level calculator 214, the noise map generator 215, and the output unit 216 are implemented by executing a program by the CPU 201 (see FIG. 3B). For example, the communication unit 211 is implemented by the communication I/F 205 (see FIG. 3B) included in the server 200.

### <Function of terminal device 300>

As illustrated in FIG. 4, the terminal device 300 includes a communication unit 301, a setting unit 302, and a display controller 303.

The communication unit 301 transmits data to and receives data from an external device by communicating with the external device. For example, the communication unit 301 receives an assessment result transmitted from the server 200 through the communication network 18.

The setting unit 302 sets various parameter values (e.g., various thresholds) used in the assessment system 10 to each device disposed in the assessment system 10 in response to the setting operation by the manager of the worksite 12. For example, the setting unit 302 may set the sound insulation device 100 to be assessed, the assessment period, or the like to the server 200.

The display controller 303 controls the display by the display 207 included in the terminal device 300. For example, the display controller 303 displays a noise map received by the communication unit 301 on the display 207.

In the terminal device 300, for example, the setting unit 302 and the display controller 303 are implemented by executing a program by the CPU 201 (see FIG. 3B). For example, the communication unit 301 is implemented by the communication I/F 205 (see FIG. 3B) disposed on the terminal device 300.

### (Example (first example) of procedure for generating a noise map by a server 200)

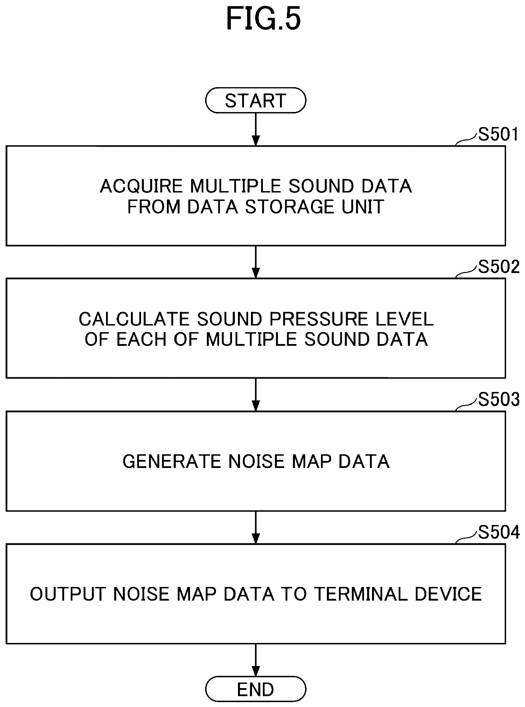

FIG. 5 is a flowchart illustrating an example (first example) of a procedure of a noise map generation process by a server 200 according to the first embodiment of the present invention. This first example illustrates a case where the server 200 generates noise map data, and the terminal device 300 generates a noise map and displays the noise map.

First, in Step S501, the sound data acquiring unit 213 acquires sound data (one or both of external auditory canal internal sound data and external auditory canal external sound data) from the data storage unit 212 within an assessment period (e.g., one hour, one day, etc.) in which an assessment is conducted with respect to a sound insulation device 100 to be assessed (e.g., any one sound insulation device, any two or more sound insulation devices, all the sound insulation devices, etc.).

Next, in Step S502, the sound pressure level calculator 214 calculates each of the sound pressure levels of multiple sound data acquired in Step S501.

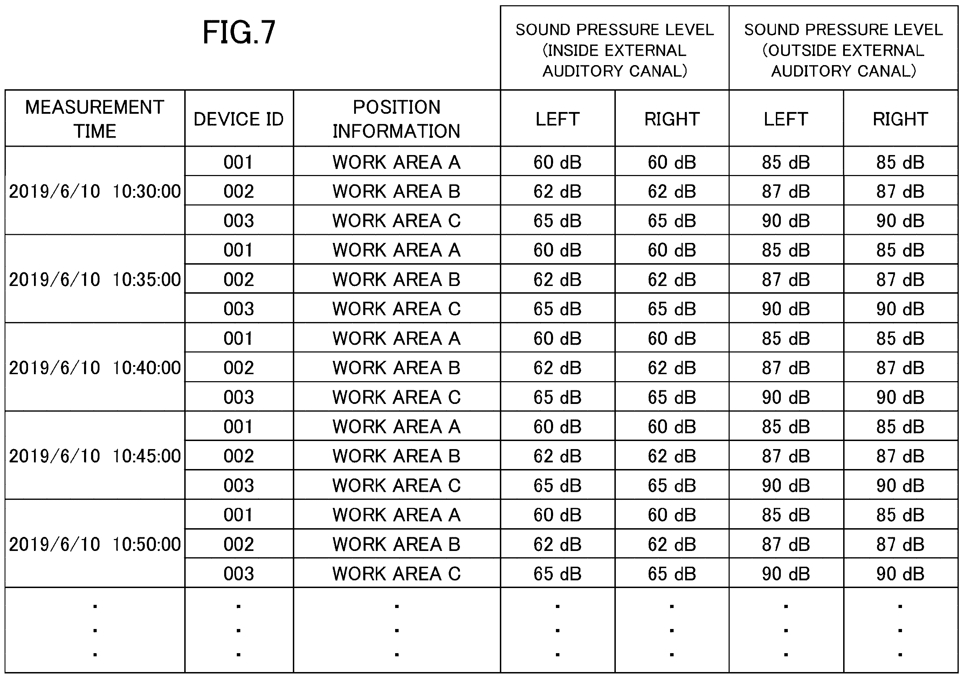

Next, the noise map generator 215 generates noise map data (see FIG. 7) representing a sound pressure level of the noise at the work position (or work area) of the worksite 12, based on the sound data acquired in Step S501 and the sound pressure level calculated in Step S502 (Step S503).

In step S504, the output unit 216 outputs the noise map data generated in step S503 to the terminal device 300 through the communication unit 211 and the communication network 18. Thereafter, the server 200 ends a series of processes illustrated in FIG. 5.

In the terminal device 300, when the communication unit 301 receives the noise map data transmitted from the server 200 in step S504, the display controller 303 generates the noise map based on the noise map data and displays the generated noise map on the display 207 (see FIG. 3B) included in the terminal device 300 through a predetermined application screen.

### (Example (second example) of procedure for generating a noise map by a server 200)

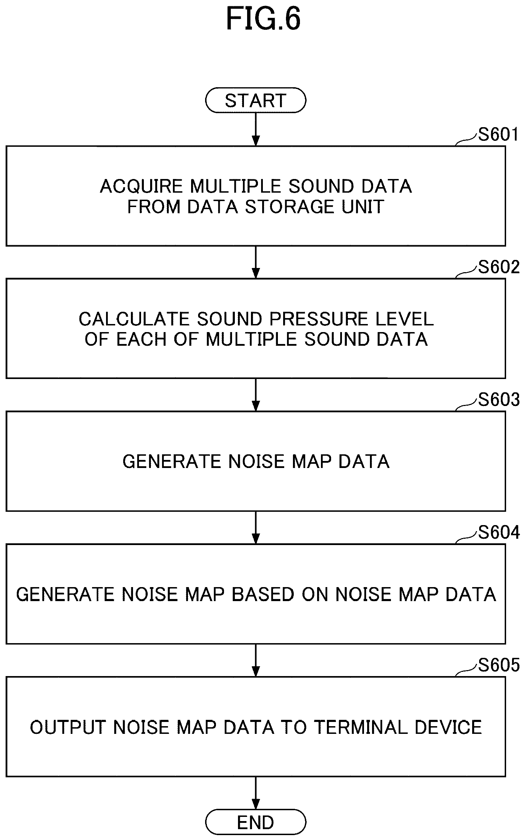

FIG. 6 is a flowchart illustrating an example (second example) of a procedure of a noise map generation process by the server 200 according to the first embodiment of the present invention.

In this second example, the server 200 generates noise map data and a noise map, and the terminal device 300 displays the noise map.

First, in Step S601, the sound data acquiring unit 213 acquires sound data (one or both of the external auditory canal internal sound data and the external auditory canal external sound data) of the sound insulation device 100 to be assessed (e.g., any one insulation device, any two or more insulation devices, all the insulation devices, etc.) within the assessment period (e.g., one hour, one day, etc.) in which an assessment is conducted with respect to the sound insulation device 100.

Next, in Step S602, the sound pressure level calculator 214 calculates each of the sound pressure levels of the multiple sound data acquired in Step S601.

Next, the noise map generator 215 generates the noise map data (see FIG. 7) representing the sound pressure level of the noise at a work position (or work area) of the worksite 12 based on the sound data acquired in Step S601 and the sound pressure level calculated in Step S602 (Step S603) .

Next, the noise map generator 215 colors each work position (or each work area) on a map screen of the worksite 12 with a color corresponding to the sound pressure level measured at the work position (or work area), based on the noise map data generated in step S603, to generate the map screen of the worksite 12 with the sound pressure levels of noise being displayed in different colors, on a per work position basis or on a per work area basis (step S604).

In step S605, the output unit 216 outputs the noise map generated in step S604 to the terminal device 300 through the communication unit 211 and the communication network 18. Thereafter, the server 200 ends a series of processes illustrated in FIG. 6.

In the terminal device 300, when the communication unit 301 receives the noise map transmitted from the server 200 in step S605, the display controller 303 displays a noise map on the display 207 (see FIG. 3B) included in the terminal device 300 through a predetermined application screen.

The noise map displayed by the terminal device 300, which is obtained as a result of the noise map generation process illustrated in FIG. 5 or FIG. 6, is a noise map with the sound pressure levels of noise acquired by the sound insulation device 100 being displayed in different colors, on a per work position basis or on a per work area basis, with respect to a map screen of the worksite 12. This enables the manager to visually understand the sound pressure level of the noise for each work position (or work area) at the worksite 12.

The server 200 and the terminal device 300 may generate a noise map every predetermined time (e.g., every 10 minutes, every 1 hour, etc.) during the assessment period in which the assessment is conducted. In this case, the terminal device 300 can display a plurality of noise maps generated in an animated manner by switching the plurality of noise maps sequentially. This enables the manager to visually understand changes in the sound pressure level of the noise of each work position (or work area) at the worksite 12 over time.

### (Example of noise map data generated by noise map generator 215)

FIG. 7 is a diagram illustrating an example of noise map data generated by the noise map generator 215 according to the first embodiment of the present invention.

As illustrated in FIG. 7, the noise map data generated by the noise map generator 215 is associated with the sound pressure level of the sound data, position information representing the acquisition position of the sound data, time information representing the acquisition time of the sound data, and the device ID of the sound insulation device 100 acquiring the sound data, on a per work position or work area basis at the worksite 12.

In the example illustrated in FIG. 7, the noise map data indicates the device ID, the sound pressure level, and the position information of the sound data acquired by each of the three sound insulation devices 100 (device IDs "001", "002", and "003") at every predetermined time unit (every 5 minutes). As illustrated in FIG. 7, the three sound insulation devices 100 differ in their respective work areas. Thus, the noise map data illustrated in FIG. 7 represents the sound pressure levels of the noise in each of the three work areas ("Work Area A", "Work Area B", and "Work Area C") in the worksite 12 at every predetermined time unit (every 5 minutes).

In the example illustrated in FIG. 7, the noise map data indicates both right and left sound pressure levels of each of the external auditory canal internal sound data and the external auditory canal external sound data acquired by each of the sound insulation devices 100. However, the configuration is not limited to this example. For example, the noise map data may indicate one of the left and right sound pressure levels or the mean value of the left and right sound pressure levels.

The sound pressure level set in the noise map data may be only the sound pressure levels of the external auditory canal internal sound data, the sound pressure levels of the external auditory canal external sound data, or the sound pressure levels of both the external auditory canal internal sound data and the external auditory canal external sound data. For example, since the noise map data indicates the sound pressure levels of the external auditory canal internal sound data, it is possible to generate a noise map indicating the sound pressure levels inside the external auditory canal of each worker from the noise map data. Likewise, since the noise map data indicates the sound pressure levels of the external auditory canal external sound data, it is possible to generate a noise map indicating the sound pressure levels outside the external auditory canal of each worker from the noise map data.

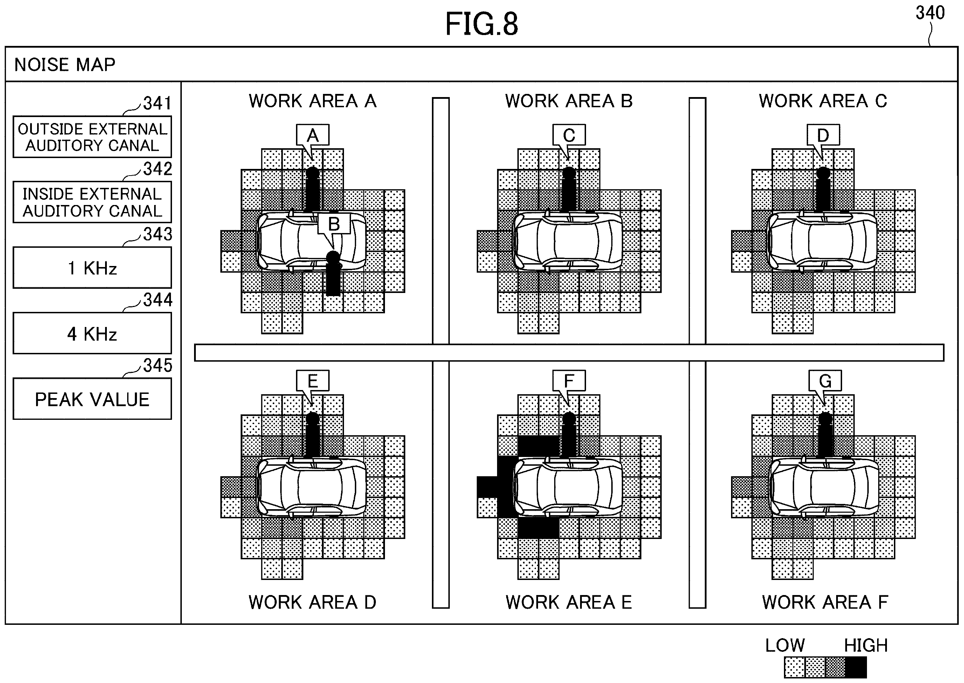

In the example illustrated in FIG. 7, the position information of each work area is set as the noise map data. However, the position information representing the more detailed position may be set as illustrated in FIG. 8 according to the accuracy of acquiring the position information by the sound insulation device 100.

In addition, the sound pressure level calculator 214 is configured to calculate the sound pressure level of a predetermined frequency band (e.g., a 1 kHz band, a 4 kHz band or the like, which is likely to affect humans) for each of the plurality of sound data acquired by a corresponding one of the sound insulation devices 100, and the noise map data may indicate the sound pressure level of the predetermined frequency band included in the sound data acquired by the corresponding one of the sound insulation devices 100.

### (Example of noise map)

FIG. 8 is a diagram illustrating an example of a noise map displayed on the terminal device 300 according to the first embodiment of the present invention. The display screen 340 illustrated in FIG. 8 is an example of a display screen displayed on the display 207 of the terminal device 300. The display screen 340 is a screen displaying a noise map representing distributions of sound pressure levels of the noise at the worksite 12.

As illustrated in FIG. 8, in the display screen 340 of the worksite 12, sound pressure levels of noise measured with respect to a plurality of sound insulation devices 100 (seven sound insulation devices 100 in the example illustrated in FIG. 8) are displayed in colors corresponding to the respective sound pressure levels of the noise of the measurement positions. The display screen 340 allows the manager of the worksite 12 to visually determine the sound pressure level of the noise at a worksite with respect to each of a plurality of work areas in the worksite 12 ("Work Area A" through "Work Area F") .

Further, as illustrated in FIG. 8, in the display screen 340, a current position of each of the workers ("A" to "G") is indicated, based on the position information acquired from a corresponding one of the sound insulation devices 100. This enables the manager of the worksite 12 to visually determine where each worker is currently working and how much noise is exposed to the sound pressure level.

In addition, as illustrated in FIG. 8, display screen 340 displays buttons 341, 342, 343, 344 and 345, all of which are configured to be selectable by the manager of the worksite 12.

For example, when the button 341 represented as "outside the external auditory canal" is selected by the manager of the worksite 12, the display controller 303 of the terminal device 300 may switch the display of the noise map displayed on the display screen 340 to represent distributions of sound pressure levels of a plurality of external auditory canal external sound data, based on the sound pressure levels of the plurality of external auditory canal external sound data included in the noise map data.

For example, when the button 342 represented as "inside the external auditory canal" is selected by the manager of the worksite 12, the display controller 303 of the terminal device 300 may switch the display of the noise map displayed on the display screen 340 to represent distributions of the sound pressure levels of the external auditory canal internal sound data, based on the sound pressure levels of the plurality of external auditory canal internal sound data included in the noise map data.

For example, when the button 343 represented by "1kHz" is selected by the manager of the worksite 12, the display controller 303 of the terminal device 300 may switch the display of the noise map displayed on the display screen 340 to represent a distribution of the sound pressure level of the 1kHz band (an example of a "predetermined frequency band") included in the noise, based on the sound pressure level of the plurality of 1kHz bands included in the noise map data.

For example, when the button 344 represented by "4kHz" is selected by the manager of the worksite 12, the display controller 303 of the terminal device 300 can switch the display of the noise map displayed on the display screen 340 to represent a distribution of the sound pressure level of the 4kHz band (an example of a "predetermined frequency band") included in the noise, based on the sound pressure level of the plurality of 4kHz bands included in the noise map data.

For example, when the button 345 represented by "peak value" is selected by the manager of the worksite 12, the display controller 303 of the terminal device 300 can switch the display of the noise map displayed on the display screen 340 so as to represent the peak value of the sound pressure level for each position during the assessment period (e.g., one day) based on a plurality of sound pressure levels (e.g., the sound pressure levels of the external auditory canal external sound data) included in the noise map data.

For example, based on the noise map displayed on the display 207, the manager of the worksite 12 can readily determine the workers who need noise countermeasures and the workplaces where noise countermeasures are required and take appropriate countermeasures. For example, the manager of the worksite 12 can determine the sound pressure level of the noise relative to a worker's position and operation route from the noise map. For example, the manager of the worksite 12 can take countermeasures against the worker's position and operation route, based on information such as the frequency and the sound pressure level obtained from the noise map, and furthermore, can understand the effect of the countermeasures taken. For example, the manager of the worksite 12 can identify a location where the sound pressure level is low at the worksite 12 from the noise map, and can propose the location as a conversation area to the worker.

The display controller 303 of the terminal device 300 may immediately display the sound pressure level of the sound data collected by each sound insulation device 100 on the noise map to display the sound pressure levels at the worksite 12 in real time.

The display controller 303 of the terminal device 300 may display a noise map indicating the difference value (i.e., the sound insulation performance of the sound insulation device) between the sound pressure level of the external auditory canal internal sound data and the sound pressure level of the external auditory canal external sound data. In this case, the display controller 303 may, for example, display information indicating whether or not the sound insulation device 100 of each worker is suitable to the work position (e.g., whether or not sound insulation performance is low, whether or not too much sound insulation is provided). Thus, the manager of the worksite 12 may, for example, instruct each worker to wear a sound insulation device 100 having appropriate sound insulation performance.

The display controller 303 of the terminal device 300 may also display each sound pressure level on the noise map such that the sound insulation device 100 from which sound data is acquired or the sound insulation device 100 used by a worker is displayed in an identifiable manner (e.g., a device ID or user name is displayed when the cursor is overlaid on the display of sound pressure level on the noise map).

As described above, the assessment system 10 according to the first embodiment includes a sound data acquiring unit 213 configured to acquire sound data collected by a sound insulation device 100 fitting into a worker's (i.e., a wearer's) ears at the worksite 12, and a noise map generator 215 configured to generate a noise map representing a distribution of sound pressure levels at the worksite 12, based on the sound data acquired by the sound data acquiring unit 213 and position information associated with the sound data. Thus, in the assessment system 10 according to the first embodiment, it is possible to conduct the assessment associated with the noise to which the wearer is actually exposed, based on the noise level to which the wearer is actually exposed.

In the assessment system 10 according to the first embodiment, at least a part of the functions of the server 200 (see FIG. 4) may be disposed in the terminal device 300, and the functions of the server 200 may be implemented by the server 200 and the terminal device 300. For example, the data storage unit 212 may be disposed in the server 200, and the sound data acquiring unit 213, the sound pressure level calculator 214, and the noise map generator 215 may be disposed in the terminal device 300.

For example, the terminal device 300 may store a plurality of sound data collected from a plurality of sound insulation data instead of the server 200 to generate a noise map based on the plurality of sound data.

### [Second Embodiment]

### (System configuration of the assessment system 10A)

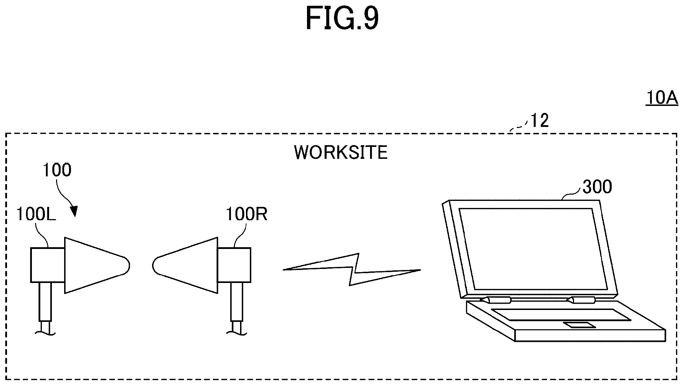

FIG. 9 is a diagram illustrating a system configuration of an assessment system 10A according to a second embodiment of the present invention. The assessment system 10A illustrated in FIG. 9 differs from the assessment system 10 according to the first embodiment in that the assessment system 10A illustrated in FIG. 9 does not include the server 200, and in that the sound insulation device 100 and the terminal device 300 are disposed such that the sound insulation device 100 and the terminal device 300 are capable of performing wireless communication or wired communication with each other at the worksite 12.

For example, in the assessment system 10A according to the second embodiment, the terminal device 300 is provided with the functions of the server 200 described in the first embodiment (i.e., the function of collecting the sound data from the sound insulation device 100, the function of storing the sound data, and the function of generating the noise map). Thus, the functions of the server 200 described in the first embodiment can be implemented by the terminal device 300 without the server 200.

Although the first and the second embodiments of the present invention have been described in detail above, the present invention is not limited to these embodiments, and various modifications or alternations may be made within the scope of the subject matter of the present invention as claimed.

For example, in each of the embodiments described above, the sound insulation device 100 is configured to acquire the external auditory canal internal sound data and the external auditory canal external sound data by the first and second microphones 104 and 105. However, the embodiments are not limited to this example. For example, the sound insulation device 100 may measure the sound pressure level of the external auditory canal internal sound data and the sound pressure level of the external auditory canal external sound data by a sound pressure level measuring device disposed in the sound insulation device 100. The sound insulation device 100 may store the sound pressure level data representing the measured sound pressure levels and may transmit the sound pressure level data to the server 200 at any time. Further, the noise map generator 215 of the server 200 may generate a noise map, based on the sound pressure level data collected from the sound insulation device 100.

The sound insulation device 100 may further include a sound pressure level calculator configured to calculate a sound pressure level of sound data acquired by the first microphone 104 and a sound pressure level of sound data acquired by the second microphone 105. In this case, instead of storing each sound data, the data storage unit 120 may store sound pressure level data representing the sound pressure level of each sound data. The communication unit 127 may transmit the sound pressure level data stored in the data storage unit 120 to the server 200, instead of transmitting each sound data to the server 200 at any time. Further, the noise map generator 215 of the server 200 may generate a noise map, based on the sound pressure level data collected from the sound insulation device 100.

This international application claims priority under Japanese Patent Application No. 2019-141548, filed with the Japanese Patent Office on July 31, 2019, and the entire contents of Japanese Patent Application No. 2019-141548 are incorporated herein by reference.

### [Description of Reference Codes]

- 12 10,10A,10B: assessment system worksite
- 18: communication network
- 100: sound insulation device
- 100L: fitting portion
- 100R: fitting portion
- 101: housing
- 102: tube
- 103: sound insulation member
- 104: 1st microphone
- 105: 2nd microphone
- 120: data storage unit
- 127: communication unit
- 200: server
- 211: communication unit
- 212: data storage unit
- 213: sound data acquiring unit
- 214: sound pressure level calculator
- 215: noise map generator
- 216: output unit
- 300: terminal device
- 301: communication unit
- 302: setting unit
- 303: display controller

## Claims

1. An assessment system comprising:
a sound data acquiring unit configured to acquire sound data collected by a sound insulation device at a predetermined assessment location, the sound insulation device being fit into a wearer's ears; and
a noise map generator configured to generate a noise map representing a distribution of a sound pressure level at the predetermined assessment location, based on the sound data acquired by the sound data acquiring unit and position information associated with the sound data.

2. The assessment system according to claim 1,
wherein the sound data acquiring unit acquires sound data collected by the sound insulation device, the sound data being one of or both of external auditory canal internal sound data and external auditory canal external sound data, the external auditory canal internal sound data representing a sound inside an external auditory canal of the wearer, and the external auditory canal external sound data representing a sound outside the external auditory canal of the wearer, and
wherein the noise map generator generates the noise map, based on the one of or both of the external auditory canal internal sound data and the external auditory canal external sound data.

3. The assessment system according to claim 2,
wherein the sound data acquiring unit acquires the sound data of both of the external auditory canal internal sound data and the external auditory canal external sound data, and
wherein the noise map generator generates a noise map based on the external auditory canal internal sound data and a noise map based on the external auditory canal external sound data.

4. The assessment system according to claim 3, further comprising:
a display controller configured to display the noise maps on a display device,
wherein the display controller is enabled to display the noise maps by switching between the noise map based on the external auditory canal internal sound data and the noise map based on the external auditory canal external sound data.

5. The assessment system according to any one of claims 1 to 4,
wherein the noise map generator generates the noise map, based on the sound data acquired by the sound data acquiring unit, the noise map representing a distribution of a sound pressure level at a predetermined frequency band of noise at the predetermined assessment location.

6. The assessment system according to any one of claims 1 to 4,
wherein the noise map generator generates a noise map, based on the sound data acquired by the sound data acquiring unit within a predetermined assessment period, the noise map representing a peak value distribution of a sound pressure level of noise within the predetermined assessment period at the predetermined assessment location.

7. An assessment device comprising:
a sound data acquiring unit configured to acquire sound data collected by a sound insulation device at a predetermined assessment location, the sound insulation device being fit into a wearer's ears; and
a noise map generator configured to generate a noise map representing a distribution of a sound pressure level at the predetermined assessment location, based on the sound data acquired by the sound data acquiring unit and position information associated with the sound data.

8. An assessment method comprising:
acquiring sound data collected by a sound insulation device at a predetermined assessment location, the sound insulation device being fit into the wearer's ears; and
generating a noise map representing a distribution of a sound pressure level at the predetermined assessment location, based on the acquired sound data and position information associated with the sound data.

9. A program for causing a computer to function as the following units, the following units comprising:
a sound data acquiring unit configured to acquire sound data collected by a sound insulation device at a predetermined assessment location, the sound insulation device being fit into a wearer's ears; and
a noise map generator configured to generate a noise map representing a distribution of a sound pressure level at the predetermined assessment location, based on the sound data acquired by the sound data acquiring unit and position information associated with the sound data.
